# EUROPÄISCHE PATENTANMELDUNG

(11) **EP 0 709 440 A2**
(43) Veröffentlichungstag der Anmeldung: **01.05.1996**
(21) Anmeldenummer: 95116140.5
(22) Anmeldetag: 13.10.1995
(51) Int. Cl.: C09D 11/02

(54) **Farbstoffe für Drucktinten**

(30) Priorität: 26.10.1994 DE 4438177
(71) Anmelder: BAYER AG, D-51368 Leverkusen (DE)
(72) Erfinder: Hassenrück, Karin, Dr., D-40468 Düsseldorf (DE); Wild, Peter, Dr., D-51519 Odenthal (DE); Michna, Martin, Dr., D-50259 Pulheim (DE)

(57) **Zusammenfassung**

Es wurde ein Verfahren zum Färben bzw. Bedrucken von Papier, Holz, Kunststoff oder Metall gefunden, bei dem Farbstoffe eingesetzt werden, die in Form der freien Säure der Formel (I) entsprechen 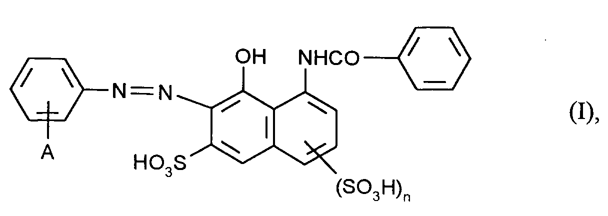
worin
- A: einen gegebenenfalls durch Alkyl oder Cycloalkyl substituierten Phenolrest bedeutet und
- n: für 0 oder 1 steht.

## Beschreibung

Die Erfindung betrifft ein Verfahren zum Bedrucken von Papier, Holz, Kunststoff oder Metall mit speziellen Azofarbstoffen sowie ein Verfahren zum Bedrucken dieser Materialien mit Drucktinten, die spezielle Azofarbstoffe enthalten und ein Verfahren zum Massefärben von Papier mit speziellen Azofarbstoffen.

Gegenstand der Erfindung ist also ein Verfahren zum Bedrucken von Papier, Holz, Kunststoff oder Metall mit mindestens einem Farbstoff der in Form der freien Säure der Formel (I) entspricht 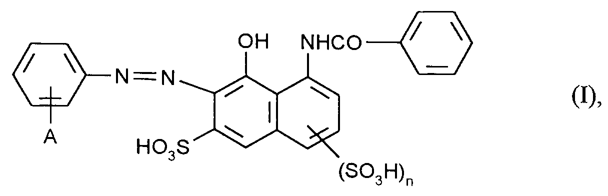
worin
- A: einen in ortho-, meta- oder para-Stellung zur Azogruppe stehenden Rest der Formel 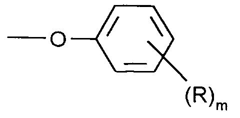 bedeutet, in der
- R: unabhängig voneinander für unsubstituiertes oder durch Hydroxy-, Amino-, Carboxyl- oder Sulfogruppen substituiertes C₁-C₅-Alkyl oder C₅-C₈-Cycloalkyl steht,
- n: für 0 oder 1 steht und
- m: 0 bis 5, vorzugsweise 1 bis 3, insbesondere 1, bedeutet.

Beispielhaft kann R die folgenden Bedeutungen annehmen: Methyl, Ethyl, n-Propyl, iso-Propyl, n-Butyl, sek.-Butyl, tert.-Butyl, Pentyl, Hydroxyethyl, Hydroxypropyl, Aminoethyl, Aminopropyl, Cyclopentyl, insbesondere Cyclohexyl.

In einer bevorzugten Ausführungsform des erfindungsgemäßen Verfahrens werden solche Farbstoffe der Formel (I) eingesetzt, worin der Rest A orthoständig zur Azogruppe ist und n = 1 bedeutet. Dabei kommen besonders bevorzugt solche Farbstoffe der Formel (I) zum Einsatz, worin zusätzlich m = 1 ist und der Rest R in ortho- oder para-Stellung zum Sauerstoffatom steht. Ganz besonders bevorzugt sind dabei die Farbstoffe der Formel (I), die der Formel (II) entsprechen

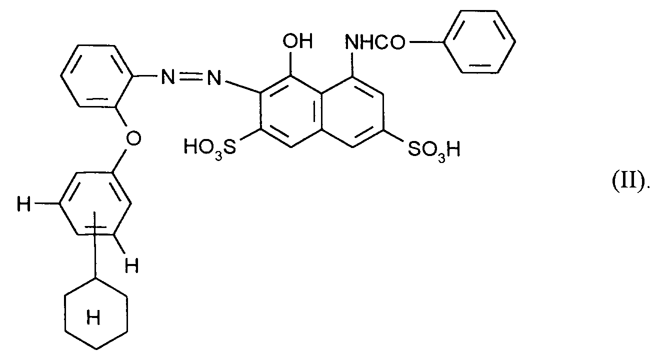

Bei den zwei durch die Formel (II) repräsentierten Farbstoffen ist die Cyclohexylgruppe einmal in ortho-Stellung (IIa) und einmal para-Stellung (IIb) zum Sauerstoffatom gebunden. Vorzugsweise liegen diese beiden Isomeren als Gemisch von 80 bis 90 % (IIa) und 10 bis 20 % (IIb) vor.

Die Farbstoffe der Formeln (I) und (II) können als freie Säuren oder als Salze, vorzugsweise als Alkalisalze wie Natrium-, Kalium- oder Lithiumsalze oder als Ammonium- oder gegebenenfalls substituierte Alkylammoniumsalze vorliegen.

Die Farbstoffe der Formel (I) sind beispielsweise aus US-A 2 785 158 und DE-A 2 043 821 als Wollfarbstoffe bekannt und können auf bekannte Art und Weise hergestellt werden. Zum Bedrucken von Textilien wurden Farbstoffe der Formel (I) bereits in EP 583 133 eingesetzt.

Das nach dem erfindungsgemäßen Verfahren zu bedruckende Material wird vorzugsweise mit Drucktinten bedruckt.

Zur Herstellung dieser Drucktinten wird mindestens ein Farbstoff der Formel (I) in Wasser und/oder einem oder mehreren organischen Lösungsmitteln, gegebenenfalls unter Zusatz von organischen und/oder anorganischen Säuren oder organischen und/oder anorganischen Basen, gelöst. Vorzugsweise wird ein Farbstoff der Formel (I) zur Herstellung dieser Drucktinten verwendet, der zuvor durch Anwendung von Membranverfahren wie beispielsweise Ultrafiltration, Mikrofiltration, Reversosmose oder deren Kombination gereinigt, entsalzt und ggf. aufkonzentriert wurde. Die bei den angegebenen Membranverfahren anfallenden Lösungen oder Suspensionen können direkt zur Herstellung der Drucktinten eingesetzt werden. Es ist aber auch möglich, die Lösungen oder Suspensionen zuvor in feste Formulierungen, z.B. duch Sprühtrocknung, zu überführen.

Es ist auch möglich, die bei der Synthese des Farbstoffs anfallende Syntheselösung oder -Suspension ohne Zwischenisolierung des Farbstoffs, gegebenenfalls unter Zusatz von anorganischen und/oder organischen Basen oder anorganischen und/oder organischen Säuren und gegebenenfalls unter Zusatz von einem oder mehreren organischen Lösungsmitteln und Wasser, in die Drucktinten zu überführen.

Die Syntheselösung oder -Suspension wird vorzugsweise zuvor durch Anwendung von Membranverfahren wie beispielsweise Ultrafiltration, Mikrofiltration und Reversosmose oder deren Kombination gereinigt und entsalzt.

Vorzugsweise enthalten diese Drucktinten 0,1 bis 20 Gew.-%, insbesondere 0,5 bis 15 Gew.-% und ganz besonders bevorzugt 0,5 bis 10 Gew.-% eines Farbstoffs der Formel (I) gelöst in Wasser und/oder einem oder mehreren organischen Lösungsmitteln. Der pH-Wert der Drucktinten kann zwischen pH 3 und 9 liegen. Vorzugsweise haben die Drucktinten einen pH-Wert von 4 bis 8.

Zur Einstellung des pH-Wertes können übliche organische und/oder anorganische Säuren wie z.B. Salzsäure, Milchsäure, p-Toluolsulfonsäure, Essigsäure oder Zitronensäure oder organische und/oder anorganische Basen wie Alkalihydroxide oder Amine wie Methyldiethanolamin, Diethanolamin, Triethanolamin oder Polyglykolamine wie z.B. das Umsetzungsprodukt von Ammoniak mit 6 Mol Ethylenoxid eingesetzt werden. Weiterhin können die Drucktinten übliche Puffer wie z.B. Acetate, Citrate oder Phosphonate in den hierfür üblichen Mengen enthalten.

Des weiteren können die erfindungsgemäßen Drucktinten übliche Additive wie z.B. Tenside, Fungizide, Bakterizide oder Bindemittel wie z.B. Acrylatbinder in den für diese Additive üblichen Mengen enthalten.

Die Drucktinten enthalten im allgemeinen bis zu 50 Gew.-% organische Lösungsmittel, vorzugsweise jedoch weniger als 30 Gew.-%. Besonders bevorzugt sind dabei Drucktinten, die 2 bis 30 Gew.-% organische Lösungsmittel enthalten.

Als organische Lösungsmittel kommen insbesondere wasserlösliche organische Lösungsmittel wie z.B. C₁-C₄-Alkanole wie Methanol, Ethanol, n-Propanol, Isopropanol, n-Butanol, sek.-Butanol, tert.-Butanol, Isobutanol; Pentandiole; Hexantriole; Amide wie Formamide und Dimethylacetamid; Ketone oder Ketonalkohole wie Aceton und Diacetonalkohole; Ester wie Tetrahydrofuran und Dioxan; Stickstoffhaltige Heterocyclen wie 2-Pyrrolidon, N-Methyl-pyrrolid-2-on und 1,3-Dimethylimidazolid-2-on; Polyalkylenglykole wie Polyethylenglykol und Polypropylenglykol; Alkylenglykol und Thioglykole mit C₂-C₆-Alkyleneinheiten wie Ethylenglykol, Propylenglykol, Butylenglykol, Triethylenglykol, Thiodiglykol, Hexylenglykol und Diethylenglykol; andere Polyole wie Glycerin und 1,2,6-Hexantriol; Alkylether und Polyalkylether von Alkoholen wie 2-Methoxyethanol, 2-(2-Methoxy-ethoxy)ethanol, 2-(2-Ethoxyethoxy)ethanol, 2-Methoxy-2-ethoxy-2-ethoxyethanol, 2-[2-(2-Methoxyethoxy)ethoxy]ethanol und 2-[2-(2-Ethoxyethoxy)ethoxy]ethanol in Frage.

Bevorzugte wasserlösliche organische Lösemittel sind Glykole und Glykolether wie Ethylenglykol, Diethylenglykol, Triethylenglykol, 2-Methoxy-2-ethoxy-2-ethoxyethanol; Polyethylenglykol mit einem Molgewicht bis 500; heterocyclische Ketone wie 2-Pyrrolidon, N-Methylpyrrolid-2-on und 1,3-Dimethylimidazolid-2-on; 1,5-Pentandiol. Bevorzugte Lösungsmittelgemische sind binäre Mischungen von Wasser und Diethylenglykol, Wasser und 2-Pyrrolidon, Wasser und 1,5-Pentandiol und ternäre Mischungen aus Wasser, Diethylenglykol und N-Methylpyrrolid-2-on.

Die Drucktinten können außer den Farbstoffen der Formel (I) auch noch einen oder mehrere für Drucktinten übliche Farbstoffe, wie z.B. die im Color Index gelisteten Farbstoffe, insbesondere Säurerot 52 enthalten, die beispielsweise zur Nuancierung dienen können.

Die bei dem erfindungsgemäßen Verfahren vorzugsweise einzusetzenden Drucktinten werden vorzugsweise als Aufzeichnungsflüssigkeit für Tintenstrahlaufzeichnungssysteme verwendet. Bei den Tintenstrahlaufzeichnungssystemen handelt es sich z.B. um Inkjet-Drucker wie Thermal Jet, Bubble Jet, Piezo-Inkjet oder Ventil Inkjet. Bevorzugtes Aufzeichnungsmaterial für Inkjet-Drucker ist Papier.

Das Tintenstrahlaufzeichnungsverfahren ist an sich bekannt. Dabei werden Tröpfchen einer Schreibflüssigkeit aus einer oder mehreren kleinen Düsen gezielt auf ein Trägermaterial geschossen. Durch elektronische Aussteuerung werden die einzelnen Tröpfchen zu Schriftzeichen oder graphischen Mustern zusammengefaßt. Dabei ist es erforderlich, daß die Tinte mit dem Trägermaterial, bevorzugt Papier, wechselwirkt. Die Tinte sollte in das Papier eindringen, ohne zuviel auseinanderzulaufen, da sonst die Druckqualität leidet. Die gedruckte Information muß schnell trocknen, sowie wasserfest und wischfest sein. Viele Tinten besitzen einige der geforderten Eigenschaften auf Kosten der anderen Eigenschaften. Besonders die Wasserfestigkeit der Farbstoffe ist meistens unbefriedigend.

Überraschenderweise wurde gefunden, daß die nach dem erfindungsgemäßen Verfahren eingesetzten Farbstoffe der Formel (I) als Drucktinten in Tintenstrahlaufzeichnungssystemen besonders wasserfeste und wischfeste Drucke ergeben. Die erfindungsgemäßen Drucktinten ergeben auf einer Vielzahl unterschiedlicher Papiere gute Wasserechtheiten. Besonders wichtig ist ihre Eignung für eine Vielzahl von nicht gestrichenen Papieren, sogenannten plain papers. Hier sind besonders die weit verbreiteten weitgehend neutralen Schreibpapiere zu nennen, die zunehmende Verbreitung finden.

Gleichermaßen bevorzugt ist das Bedrucken von Kunststoff-Folien mit Tintenaufzeichnungsverfahren unter Verwendung der erfindungsgemäßen Drucktinten. Die dabei bevorzugt zum Einsatz kommenden Kunststoff-Folien sind transparente Polyethylen-Folien.

Die Erfindung betrifft weiterhin ein Verfahren zum Massefärben von Papier dadurch gekennzeichnet, daß man einen Farbstoff der Formel (I) verwendet.

Die folgenden Beispiele sollen die Erfindung erläutern ohne sie jedoch zu beschränken.

Prozente und Teile beziehen sich, soweit nichts anderes angegeben, jeweils auf das Gewicht.

### 1. Herstellung der Drucktinten

1000 kg einer Lösung von 50 kg Farbstoff der Formel (II) (IIa/IIb ca. 88/12) in Wasser mit einem Trockengehalt von 6,5 % und einem Chloridgehalt von 0,8 % werden in einer handelsüblichen Druckpermeationsanlage ultrafiltriert. Zunächst werden 1000 kg Permeat abgezogen und kontinuierlich durch 1000 kg entmineralisiertes Wasser ersetzt. Anschließend wird durch Abzug von 400 kg Permeat auf 600 kg Lösung eingeengt. Diese Lösung wird durch Abzug von 600 kg Permeat und kontinuierlichen Ersatz durch entmineralisisertes Wasser weiter entsalzt. Danach wird durch Abzug von Permeat so weit aufkonzentriert bis der Fluß auf weniger als 200 1 x m⁻² x d⁻¹ abgefallen ist. Das verbleibende Konzentrat wird sprühgetrocknet und kann durch erneutes Auflösen in Wasser und/oder einem oder mehreren organischen Lösungsmittel zu einer Drucktinte verarbeitet werden, die sich hervorragend für das Ink-Jet-Druckverfahren eignet.

### 2. Bestimmung der Wasserechtheit Allgemeine Angaben zu den Versuchen

Die Drucktinten der Beispiele 1 bis 6 wurden durch Lösen der angegebenen Farbstoffe in den genannten Lösungsmitteln hergestellt.

Anschließend wurden die Farbstofflösungen jeweils durch ein 0,2 µm (0,0002 mm) Filter gepreßt und in gereinigte Kartuschen Typ 51608A der Firma Hewlett Packard für Deskjet 500® gefüllt. Auf dem Deskjet 500® wurde Agfa Kopierpapier Typ 701® vollflächig bedruckt.

Die Vergleichstinte des Beispiels 7 enthält den für einen Tintenstrahldrucker üblichen Magentafarbstoff. Bei der Vergleichstinte des Beispiels 7 handelt es sich um ein fertiges Handelsprodukt, das ohne Filtration direkt eingesetzt wird.

Die Drucke wurden 24 Stunden im Raumklima gelagert und dann für 24 Stunden in vollentsalztem Wasser gelagert. Anschließend wurde das Papier aus dem Wasserbad entnommen und getrocknet. Bewertet wurde die Farbtiefe auf dem Originaldruck mit der verbliebenen Anfärbung des Papiers nach Lagerung unter Wasser (Bewertungsskala 1-5: 5 sehr gut).

### Beispiel 1

### Drucktinte:

90 Teile vollentsalztes Wasser, 10 Teile Diethylenglykol und 1,5 Teile des Farbstoffs der Formel (II)

### Beispiel 2

### Drucktinte:

92 Teile vollentsalztes Wasser, 8 Teile 1,5-Pentandiol und 1,5 Teile des Farbstoffs der Formel (II)

### Beispiel 3

### Drucktinte:

93 Teile vollentsalztes Wasser, 7 Teile 2-Pyrrolidon, 1,5 Teile des Farbstoffs der Formel (II)

### Beispiel 4

### Drucktinte:

90 Teile vollentsalztes Wasser, 10 Teile Diethylenglykol, 0,75 Teile des Farbstoffs der Formel (II) und 0,75 Teile Acid Red 52

### Beispiel 5

### Drucktinte:

92 Teile vollentsalztes Wasser, 8 Teile 1,5-Pentandiol, 0,75 Teile des Farbstoffs der Formel (II) und 0,25 Teile Acid Yellow 52

### Beispiel 6

### Drucktinte:

90 Teile vollentsalztes Wasser, 10 Teile Diethylenglykol und 0,75 Teile Acid Red 52 und 0,25 Teile Farbstoff (II)

### Beispiel 7

Die handelsübliche Vergleichstinte enthält 1 Gew.-% des Farbstoffs Acid Red 52, 9 Gew.-% 1,5-Pentandiol und 90 Gew.-% vollentsalztes Wasser.

Die Drucktinten der Beispiele 1-6 werden erfindungsgemäß beim Ink-jet-printing eingesetzt, wobei die Farbstoffe der erfindungsgemäß eingesetzten Drucktinten Vorteile gegenüber dem Vergleichsdruck aufweisen.

Die Ergebnisse der Bestimmung der Wasserechtheit für die Beispiele 1 bis 7 sind in folgender Tabelle zusammengefaßt.

| Beispiel | Wasserechtheit |
|---|---|
| 1 | 3 |
| 2 | 3 |
| 3 | 3 |
| 4 | 2 |
| 5 | 2 |
| 6 | 2 |
| 7 | 1 |

## Patentansprüche

1. Verfahren zum Bedrucken von Papier, Holz, Kunststoff oder Metall mit einem Farbstoff, der in Form der freien Säure der Formel (I) entspricht 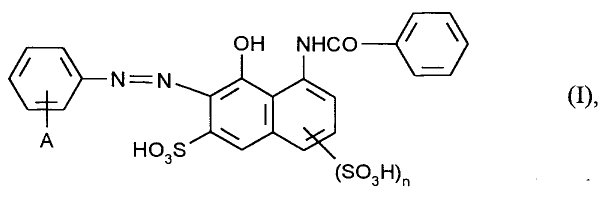 worin
A einen in ortho-, meta- oder para-Stellung zur Azogruppe stehenden Rest der Formel 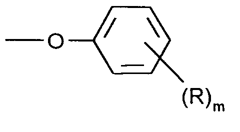 bedeutet, worin
R unabhängig voneinander für unsubstituiertes oder durch Hydroxy-, Amino-, Carboxyl- oder Sulfogruppen substituiertes C₁-C₅-Alkyl oder C₅-C₈-Cycloalkyl steht,
n für 0 oder 1 steht und
m 0 bis 5, vorzugsweise 1 bis 3, insbesondere 1, bedeutet.

2. Verfahren gemäß Anspruch 1, dadurch gekennzeichnet, daß Farbstoffe der Formel (I) eingesetzt werden, worin R Methyl, Ethyl, n-Propyl, iso-Propyl, n-Butyl, sek.-Butyl, tert.-Butyl, Pentyl, Hydroxyethyl bedeutet.

3. Verfahren gemäß Anspruch 1, dadurch gekennzeichnet, daß Farbstoffe der Formel (I) eingesetzt werden, worin der Rest A orthoständig zur Azogruppe ist und m = 1 bedeutet.

4. Verfahren gemäß Anspruch 1, dadurch gekennzeichnet, daß der Rest R in ortho- oder para-Stellung zum Sauerstoffatom steht.

5. Verfahren gemäß Anspruch 1, dadurch gekennzeichnet, daß Farbstoffe der Formel (I) verwendet werden, die der Formel (II) entsprechen

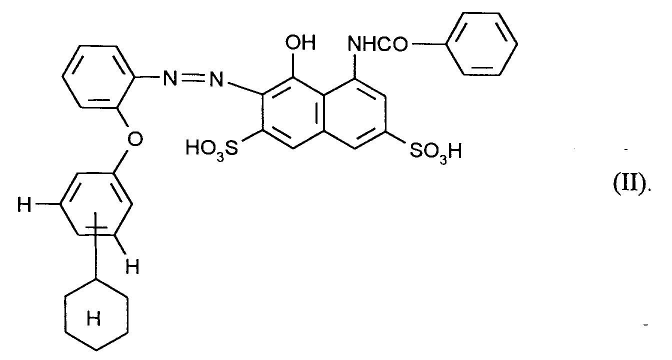

6. Verfahren gemäß Anspruch 1 zum Bedrucken von Papier mit einem Farbstoff gemäß Anspruch 1.

7. Verfahren zum Bedrucken von Papier, Holz, Kunststoff oder Metall mit einer den Farbstoff gemäß Anspruch 1 enthaltenden Aufzeichnungsflüssigkeit.

8. Verfahren gemäß Anspruch 7 unter Verwendung eines Tintenstrahlaufzeichnungssystems.

9. Verfahren zum Massefarben von Papier, dadurch gekennzeichnet, daß ein Farbstoff gemaß Anspruch 1 verwendet wird.

10. Papier, Holz, Kunststoff oder Metall, das nach wenigstens einem der vorangegangenen Verfahren gefärbt bzw. bedruckt wurde.
